(19) Europäisches Patentamt
European Patent Office
Office européen des brevets

(11) Publication number: **0 365 855 A1**

# (12) EUROPEAN PATENT APPLICATION

(21) Application number: **89117856.8**

(22) Date of filing: **27.09.89**

(51) Int. Cl.5: **G02F 1/133 , C08G 73/10**

The title of the invention has been amended (Guidelines for Examination in the EPO, A-III, 7.3).

(30) Priority: **28.09.88 JP 243129/89**
**29.03.89 JP 77497/88**

(43) Date of publication of application:
**02.05.90 Bulletin 90/18**

(84) Designated Contracting States:
**DE GB**

(71) Applicant: **HITACHI CHEMICAL COMPANY, LTD.**
**1-1 Nishishinjuku 2-chome Shinjuku-ku**
**Tokyo(JP)**

(72) Inventor: **Okuda, Naoki c/o Yamazaki Laboratory**
**Hitachi Chem. Comp. Ltd. 13-1 Higashi-cho 4-chome**
**Hitachi-shi Ibararki-ken(JP)**
Inventor: **Uchimura, Shun-ichiro c/o Yamazaki Laboratory**
**Hitachi Chem. Comp. Ltd. 13-1 Higashi-cho 4-chome**
**Hitachi-shi Ibararki-ken(JP)**
Inventor: **Kawakami, Masahiro c/o Yamazaki Laboratory**
**Hitachi Chem. Comp. Ltd. 13-1 Higashi-cho 4-chome**
**Hitachi-shi Ibararki-ken(JP)**

(74) Representative: **Strehl, Schübel-Hopf, Groening**
**Maximilianstrasse 54 Postfach 22 14 55**
**D-8000 München 22(DE)**

## (54) Orientation layer composition for liquid crystal display devices.

(57) An orientation layer composition for liquid crystal display devices comprising a polyamic acid obtainable by reacting

(1) a diamine component consisting of one or more diamines selected from aromatic diamines and aliphatic diamines, the diamine component (1) containing at least one diamine represented by the following general formula (I):

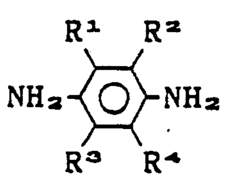

(I)

wherein $R^1$, $R^2$, $R^3$, and $R^4$ each independently are an aliphatic hydrocarbon group having from 1 to 10 carbon atoms,
and

(2) a tetracarboxylic acid dianhydride component; an orientation layer for liquid crystal display devices prepared by using the orientation layer composition for liquid crystal display devices; and a liquid crystal display device including orientation layers prepared by using the orientation layer composition.

The orientation layer prepared by using the orientation layer composition for liquid crystal display devices induces a pre-tilt angle of not less than 4° in liquid crystal material and therefore, is particularly advantageous for STN liquid crystal displays in that the selection ranges of cell gap and liquid crystal materials can be expanded.

EP 0 365 855 A1

# ORIENTATION LAYER COMPOSITION FOR LIQUID CRYSTAL DISPLAY DEVICES, ORIENTATION LAYER FOR LIQUID CRYSTAL DISPLAYS, AND LIQUID CRYSTAL DISPLAY DEVICE

## BACKGROUND OF THE INVENTION

### (a) Field of the Invention

The present invention relates to an orientation layer composition for liquid crystal display devices, an orientation layer for liquid crystal display devices, and a liquid crystal display device.

### (b) Description of the Related Art

In the conventional liquid crystal display devices for large-sized displays, there has been used STN system (super twisted nematic system), wherein the long molecule axes of the molecules of liquid crystal material are aligned so as to define, in the absence of applied electric field, a 180° to 240° helical twist arrangement of molecules in a cell between substrates. As the material for orientation layers of such STN devices, polyimides which bring about a pre-tilt angle of from 3° to 4° between the long molecule lines of liquid crystal material and the glass substrates coated with their respective orientation layers have been used.

However, in production of liquid crystal display devices of 180° to 240° twisted type, the use of orientation layers which cannot produce pre-tilt angles of 4° or more have limited the range of the cell gap between the upper and lower substrates and the range of applicable liquid crystal materials having an appropriate twisting angle, consequently forcing selection of cell gap and liquid crystal materials from narrow ranges.

## ABSTRACT OF THE DISCLOSURE

An object of the present invention is to provide an orientation layer composition for liquid crystal display devices which can produce a pre-tilt angle of not less than 4°, whereby overcoming the defects of the above-described conventional techniques and widening the ranges of selection of the cell gap and liquid crystal materials.

As the results of our researches in consideration of the above-described defects of the conventional techniques, we have found that orientation layers for liquid crystal display devices made of a specified polyimide which will be described below can produce a pre- tilt angle of not less than 4°, and consequently completed the present invention.

That is, the present invention provides an orientation layer composition for liquid crystal display devices comprising a polyamic acid obtainable by reacting

(1) a diamine component consisting of one or more diamines selected from aromatic diamines and aliphatic diamines, the diamine component (1) containing at least one diamine represented by the following general formula (I):

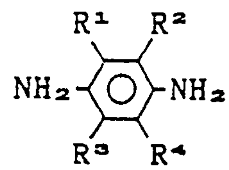

(I)

wherein $R^1$, $R^2$, $R^3$, and $R^4$ each independently are an aliphatic hydrocarbon group having from 1 to 10 carbon atoms,
and

(2) a tetracarboxylic acid dianhydride component.

Further, the present invention provides an orientation layer for liquid crystal display devices prepared by using the above-described orientation layer composition for liquid crystal display devices of the present invention.

The present invention further provides a liquid crystal optical device including the orientation layer of the present invention as a member thereof, i.e., a liquid crystal display device comprising:

I. a liquid crystal layer,

II. two support substrates which enclose the liquid crystal layer between them, and bear on their surfaces facing each other their respective electrode structures and orientation layers in the order, electrode structure, orientation layer, where the two orientation layers are prepared by using, as a forming material, the above-described orientation layer composition for liquid crystal display devices of the present invention.

The orientation layer composition of the present invention can facilitate production of 180° to 240° twisted liquid crystal cells due to its ability of producing a pre-tilt angle of not less than 4° and therefore, can be suitably used for STN liquid crystal display devices having high quality display capacity.

## DESCRIPTION OF THE PREFERRED EMBODIMENTS

The polyamic acid to be used in the present invention is prepared by reacting the diamine component (1) and the tetracarboxylic acid dianhydride component (2), and the obtained polyamic acid is to be converted into a polyimide at the time of preparing the orientation layer, by dehydration cyclization of the polyamic acid by heating and/or chemical means.

Some illustrative examples of the diamine represented by the general formula (I) to be used in the present invention include;
1,4-diamino-2,3,5,6-tetramethylbenzene,
1,4-diamino-2,3,5,6-tetraethylbenzene,
1,4-diamino-2,3,5,6-tetrapropylbenzene,
1,4-diamino-2,3,5,6-tetraisopropylbenzene,
1,4-diamino-2,3,5,6-tetrabutylbenzene,
1,4-diamino-2,3,5,6-tetraisobutylbenzene,
1,4-diamino-2,3,5,6-tetrapentylbenzene,
1,4-diamino-2,3,5,6-tetrahexylbenzene,
1,4-diamino-2,3,5,6-tetraheptylbenzene,
1,4-diamino-2,3,5,6-tetraoctylbenzene,
1,4-diamino-2,3,5,6-tetranonylbenzene,
1,4-diamino-2,3,5,6-tetradecylbenzene,
1,4-diamino-2,3-diethyl-5,6-dimethylbenzene,
1,4-diamino-2,5-diethyl-3,6-dimethylbenzene,
1,4-diamino-2-ethyl-3,5,6-trimethylbenzene,
1,4-diamino-3-ethyl-2,6-dimethyl-5-propylbenzene,
1,4-diamino-3-ethyl-2,5-dimethyl-6-propylbenzene, and
1,4-diamino-6-butyl-3-ethyl-2-methyl-5-propylbenzene.
These may be used individually or in a combination of two or more of them.

It is preferable that the diamine component (1) contains the diamine represented by the general formula (I) in an amount of not less than 50 mol % of the total amount of the diamine component (1).

Some illustrative examples of the aromatic diamines other than the diamines represented by the general formula (I), and aliphatic diamines which may be used in the present invention include;
4,4′-diaminodiphenyl ether, 4,4′-diaminodiphenylmethane, 4,4′-diaminodiphenyl sulfone, 4,4′-diaminodiphenyl sulfide, 4,4′-diamino-3,3′-dimethylbiphenyl, m-phenylenediamine, p-phenylenediamine, 1,5-naphthalenediamine, 2,6-naphthalenediamine, 1,3-bis(aminopropyl)-1,1,3,3-tetramethyldisiloxane, 2,2-bis[4-(4-aminophenoxy)-phenyl]propane, 2,2-bis[4-(4-aminophenoxy)-phenyl]-1,1,1,3,3,3-hexafluoropropane, bis[4-(3′-aminophenoxy)phenyl] sulfone, 3,3′-diaminodiphenyl sulfone, 4,4′-diaminodiphenyl ether-3-carboamide, 1,4-diaminocyclohexane, 9,9-bis(4-aminophenyl)anthracene-(10), 1,4-diaminobutane, 1,5-diaminopentane, 1,6-diaminohexane, 1,7-diaminoheptane, 1,8-diaminooctane, 1,9-diaminononane, and 1,10-diaminodecane. These may be used individually or in a combination of two or more of them.

Some illustrative examples of the tetracarboxylic acid dianhydride to be used in the present invention include;
pyromellitic acid dianhydride,
1,2,3,4-cyclobutanetetracarboxylic acid dianhydride,
3,3′,4,4′-diphenyltetracarboxylic acid dianhydride,
3,3′,4,4′-benzophenonetetracarboxylic acid dianhydride,
1,2,5,6-naphthalenetetracarboxylic acid dianhydride,
2,3,6,7-naphthalenetetracarboxylic acid dianhydride,
1,4,5,8-naphthalenetetracarboxylic acid dianhydride,
3,4,9,10-perylenetetracarboxylic acid dianhydride, and
3,3′,4,4′-dicyclohexyltetracarboxylic acid dianhydride.
These may be used individually or in a combination of two or more of them.

In the present invention, it is preferable to react the diamine component (1) and the tetracarboxylic acid dianhydride component (2) in equimolar amounts.

The above-described diamine component (1) containing essentially the diamine represented by the general formula (I) and the tetracarboxylic acid dianhydride component are dissolved in an inert solvent, and then are reacted to form a polyamic acid.

The polyamic acid to be used in the present invention has preferably an average molecular weight of 30,000 to 150,000 in polystyrene-converted value as measured by high-speed liquid chromatography.

The inert solvent which may be used in the present invention need not necessarily dissolve all monomers described above, but the suitably used inert solvent dissolves the polyamic acid to be formed. Some illustrative examples of the preferred inert solvent include N-methyl-2-pyrrolidone, N,N-dimethylformamide, N,N-diethylformamide, dimethyl sulfoxide, hexamethylphosphoramide, tetramethyl sulfone, and 1,4-dioxane. These may be used individually or in a combination of two or more of them. In addition to these solvents, other solvents for improving wettability also may be added before or after the reaction. Some examples of such other solvents which may be used in the present invention include butyl cellosolve, butyl cellosolve acetate, xylene, and toluene. Generally, the solvent for improving wettability is used preferably in an amount of not more than 50 % by

weight of the amount of the solvent used in preparation of polyamic acids.

The polyamic acid in the orientation layer composition of the present invention is converted into polyimide by heating the polyamic acid at 100 to 400 °C and/or chemically treating it with a dehydration agent, such as acetic anhydride, at the time of preparation of orientation layer. For instance, the liquid crystal display device of the present invention may be prepared by providing electrode structures to support substrates on their surfaces to be faced liquid crystal layer, further forming thereon orientation layers prepared using the orientation layer composition of the present invention, and then enclosing a liquid crystal material between the support substrates. Various kinds of nematic liquid crystals may be used as the liquid crystal material in the present invention, and according to demand, chiral reagents may be added to nematic liquid crystals to adjust the degree of helix. Typical examples of the nematic liquid crystals which may be used in the present invention include ZLI-1132, ZLI-3769, ZLI-2293, ZLI-1565, ZLI-2903, ZLI-3285 (Trade names, produced by E. MERCK CO,. LTD.), etc. Typical examples of the chiral reagents which may be used in the present invention include ZLI-811, CB-15 (Trade names, produced by E. MERCK CO., LTD.), etc.

Formation of polyimide layer onto support substrate may be performed by applying the orientation layer composition of the present invention, which comprises a polyamic acid prepared by the above-described reaction, on a glass substrate, on which a transparent electrode structure, such as ITO (Indium Tin Oxide) electrode, has previously been formed, and thereafter drying the applied layer and cyclizing the polyamic acid by dehydration, to form a polyimide layer.

The coating liquid used for preparing the layer of orientation layer composition of the present invention has preferably a viscosity of 10 to 500 cp, and may be generally adjusted to such a viscosity by addition of about 85 to 97 % by weight of the above-described solvents.

Application methods which may be employed include dip method, printing method, spraying method, etc. The dehydration cyclization temperature can be arbitrarily selected from the range of 150 to 400 °C , preferably 150 to 300 °C .

Heating time may be from one minute to six hours, preferably from one minute to three hours.

The thickness of the orientation layer of the present invention is generally from 300 to 1,500 Å.

Between the polyimide layer and glass support substrate, silane coupling agents or titanium coupling agents may be disposed in order to improve the adhesion of the polyimide to substrate.

The surface of thus prepared polyimide layer is rubbed to finish the polyimide layer to an orientation layer for liquid crystal display devices.

Generally, the rubbing treatment may be conducted as follows. A substrate carrying the polyimide layer is held on a stage by vacuum, and then, a roll, on the roll surface of which a rubbing cloth, such as a nylon cloth, is pasted, is rotated on the polyimide layer; or while the roll is being pressed against the polyimide layer, the stage or the roll is moved, to form an orientation layer. There is no particular limitation in the rubbing conditions including the rotating direction or the roll moving direction of the roll or the stage, the number of rubbing treatment, etc.

The orientation layer for liquid crystal display devices prepared by using the orientation layer composition of the present invention is particularly suitable for liquid crystal display devices of STN system.

In order to more fully and clearly illustrate the present invention, the following examples are presented. It is intended that the examples be considered as illustrative rather than limiting the invention disclosed and claimed herein.

## EXAMPLES 1 TO 3

### EXAMPLE 1

To 16.4 g of 1,4-diamino-2,3,5,6-tetramethylbenzene added was 260 g of N-methyl-2-pyrrolidone, and the mixture was stirred sufficiently. 29.4 g of 3,3′,4,4′-diphenyltetracarboxylic acid dianhydride was then added to the mixture, and the resulting mixture was allowed to react for 6 hours at room temperature, to form a sticky liquid containing a polyamic acid having a molecular weight of about 50,000. After the sticky liquid had been diluted with N-methyl-2-pyrrolidone containing 35 % by weight of butyl cellosolve to adjust the viscosity to about 100 cp, the diluted liquid was applied onto two glass substrates bearing transparent ITO electrodes by using a spinner. Removal of solvent and dehydration cyclization of polyamic acid were carried out by heating the applied layers for one hour at 250 °C , to form polyimide layers of 500 Å in thickness. After the surfaces of the polyimide layers on the two glass substrates had been subjected to general rubbing treatment, the two glass substrates were combined with each other so that the two rubbed polyimide layers face each other in antiparallel, and the joining portion was sealed with an epoxy sealing agent. Thereafter, a liquid crystal, ZLI- 1132 (Trade name, produced by E. MERCK CO., LTD.) was injected therein, to produce a liquid crystal cell. Pre-tilt angle of the liquid crystal was measured by using laser beam to be 4.6°, which satisfies the necessary condition of orientation layer for liquid crystal display devices of 180° to 240° twisted type.

Subsequently, in the same manner as the above-described manner, polyimide layers were formed by using the above-described liquid onto transparent ITO electrode structures which had been formed on two glass substrates so as to exhibit 640 × 200 dots pattern. After the polyimide layers had been subjected to general rubbing treatment and these substrates had been assembled in a cell so as to construct 220° twisted system, a mixture of a liquid-crystal, ZLI-2293, and a chiral reagent, CB-15, (Trade names, produced by E. MERCK CO., LTD.) was injected into the cell, to produce a liquid crystal display device. The liquid crystal display device generated no domain during operation, and it exhibited high contrast and displayed a high quality pattern.

EXAMPLE 2

To 16.4 g of 1,4-diamino-2,3,5,6-tetramethylbenzene added was 204 g of N-methyl-2-pyrrolidone, and the mixture was stirred sufficiently. 19.6 g of 1,2,3,4-cyclobutanetetracarboxylic acid dianhydride was then added to the mixture, and the resulting mixture was allowed to react for 7 hours at room temperature, to form a sticky liquid containing a polyamic acid having an average molecular weight of about 50,000. After the sticky liquid had been diluted with N-methyl-2-pyrrolidone containing 35 % by weight of butyl cellosolve to adjust viscosity to about 100 cp, the diluted liquid was applied onto two glass substrates bearing transparent ITO electrodes by using a spinner. Removal of solvent and dehydration cyclization of polyamic acid were carried out by heating the applied layers for one hour at 250 °C, to form polyimide layers of 500 Å in thickness. After the surfaces of the polyimide layers on the two glass substrates had been subjected to general rubbing treatment, the two glass substrates were combined so that the two rubbed polyimide layers face each other in antiparallel, and the joining portion was sealed with an epoxy sealing agent. Thereafter, a liquid crystal, ZLI-1132 (Trade name, produced by E. MERCK CO., LTD.), was injected therein, to produce a liquid crystal cell. Pre-tilt angle of the liquid crystal was measured by using laser beam to be 5.8°, which satisfies the necessary condition of orientation layer for liquid crystal display devices of 180° to 240° twisted type.

Subsequently, in the same manner as the above-described manner, polyimide layers were formed by using the above-described liquid on transparent ITO electrode structures which had been formed onto two glass substrates so as to exhibit 640 × 200 dots pattern. After the polyimide layers had been subjected to general rubbing treatment and these substrates had been assembled in a cell so as to construct 240° twisted system, a mixture of a liquid crystal, ZLI-2293, and a chiral reagent, CB-15, (Trade names, produced by E. MERCK CO., LTD.) was injected into the cell, to produce a liquid crystal display device. The liquid crystal display device generated no domain during operation, and it exhibited high contrast and displayed a high quality pattern.

EXAMPLE 3

To 11.5 g of 1,4-diamino-2,3,5,6-tetramethylbenzene and 6.4 g of 4,4′-diamino-3,3′-dimethylbiphenyl added was 101 g of N-methyl-2-pyrrolidone, and the mixture was stirred sufficiently. 21.8 g of pyromellitic acid dianhydride was then added to the mixture, and the resulting mixture was allowed to react for 5 hours at room temperature, to form a sticky liquid containing a polyamic acid having an average molecular weight of about 50,000. After the sticky liquid had been diluted with N-methyl-2-pyrrolidone containing 35 % by weight of butyl cellosolve to adjust the viscosity to about 100 cp, the diluted liquid was applied onto two glass substrates bearing transparent ITO electrodes by using a spinner. Removal of solvent and dehydration cyclization of polyamic acid were carried out by heating the applied layers for one hour at 250 °C, to form polyimide layers of 500 Å in thickness. After the surfaces of the polyimide layers on the two glass substrates had been subjected to general rubbing treatment, the two glass substrates were combined with each other so that the two rubbed polyimide layers face each other in antiparallel, and the joining portion was sealed with an epoxy sealing agent. Thereafter, a liquid crystal, ZLI-1132 (Trade name, produced by E. MERCK CO., LTD.), was injected therein, to produce a liquid crystal cell. Pre-tilt angle of the liquid crystal was measured by using laser beam to be 6.3°, which satisfies the necessary condition of orientation layer for liquid crystal display devices 180° to 240° twisted type.

Subsequently, in the same manner as the above-described manner, polyimide layers were formed by using the above-described liquid on transparent ITO electrode structures which had been formed on two glass substrates so as to

exhibit 640 × 200 dots pattern. After the polyimide layers had been subjected to general rubbing treatment and these substrates had been assembled in a cell so as to construct 220° twisted system, a mixture of a liquid crystal, ZLI-2293, and a chiral reagent, CB-15, (Trade names, produced by E. MERCK CO., LTD.) was injected into the cell, to produce a liquid crystal display device. The liquid crystal display device generated no domain during operation, and it exhibited high contrast and displayed a pattern of high quality.

## Claims

1. An orientation layer composition for liquid crystal display devices comprising a polyamic acid obtainable by reacting

(1) a diamine component consisting of one or more diamines selected from aromatic diamines and aliphatic diamines, the diamine component (1) containing at least one diamine represented by the following general formula (I):

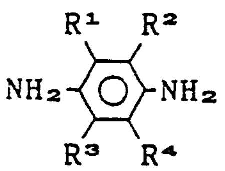

(I)

wherein $R^1$, $R^2$, $R^3$, and $R^4$ each independently are an aliphatic hydrocarbon group having from 1 to 10 carbon atoms,

and

(2) a tetracarboxylic acid dianhydride component.

2. The orientation layer composition for liquid crystal display devices as claimed in claim 1, wherein the diamine component (1) contains the diamine represented by the general formula (I) in an amount of not less than 50 mol % of the total amount of the diamine component (1).

3. The orientation layer composition for liquid crystal display devices as claimed in claim 1 or 2, wherein the diamine represented by the general formula (I) is 1,4-diamino-2,3,5,6-tetramethylbenzene.

4. The orientation layer composition for liquid crystal display devices as claimed in claim 1 or 2, wherein the diamine (1) represented by the general formula (I) is 1,4-diamino-2,3,5,6-tetramethylbenzene and the tetracarboxylic acid dianhydride component (2) is 3,3′,4,4′-diphenyltetracarboxylic acid dianhydride, 1,2,3,4-cyclobutanetetracarboxylic acid dianhydride or pyromellitic acid dianhydride.

5. The orientation layer composition for liquid crystal display devices as claimed in claim 1 or 2, wherein the diamine component (1) is 1,4-diamino-2,3,5,6-tetramethylbenzene, and the tetracarboxylic acid dianhydride component (2) is 3,3′,4,4′-diphenyltetracarboxylic acid dianhydride.

6. The orientation layer composition for liquid crystal display devices as claimed in claim 1 or 2, wherein the diamine component (1) is 1,4-diamino-2,3,5,6-tetramethylbenzene, and the tetracarboxylic acid dianhydride component (2) is 1,2,3,4-cyclobutanetetracarboxylic acid dianhydride.

7. The orientation layer composition for liquid crystal display devices as claimed in claim 1 or 2, wherein the diamine component (1) consists of 1,4-diamino-2,3,5,6-tetramethylbenzene and 4,4′-diamino-3,3′-dimethylbiphenyl, and the tetracarboxylic acid dianhydride component (2) is pyromellitic acid dianhydride.

8. An orientation layer for liquid crystal display devices prepared by using, as a forming material, an orientation layer composition for liquid crystal display devices as claimed in any of the claims 1 to 7.

9. A liquid crystal display device comprising:

I. a liquid crystal layer,

II. two support substrates which enclose the liquid crystal layer between them, and bear on their surfaces facing each other their respective electrode structures and orientation layers in the order, electrode structure, orientation layer,

wherein the two orientation layers are prepared by using, as a forming material, an orientation layer composition for liquid crystal display devices as claimed in any of the claims 1 to 7.

European Patent Office

# EUROPEAN SEARCH REPORT

Application Number

EP 89 11 7856

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 059 790 (SIEMENS)<br>----- | | G 02 F 1/133<br>C 08 G 73/10 |
| | | | **TECHNICAL FIELDS SEARCHED (Int. Cl.5)** |
| | | | G 02 F<br>C 08 G |

The present search report has been drawn up for all claims

| Place of search | Date of completion of the search | Examiner |
|---|---|---|
| THE HAGUE | 18-12-1989 | LEROY ALAIN |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document